# EUROPEAN PATENT APPLICATION

(11) **EP 1 825 743 A2**
(43) Date of publication of application: **29.08.2007**
(21) Application number: 07102618.1
(22) Date of filing: 19.02.2007
(51) Int. Cl.: A01G 1/12, F16D 3/12, F16F 15/123

(54) **Coupling for modified transmission of rotational vibrations**

(30) Priority: 24.02.2006 IT PD20060059
(71) Applicant: Holmac S.A.S. di Gastaldi Christian E.C., 35127 Padova (IT)
(72) Inventor: Lazzarin, Franco, 35025, CARTURA PD (IT)
(74) Representative: Modiano, Micaela Nadia

(57) **Abstract**

A device for the combined rotation of a shaft about its own axis, of the type which comprises a first body (11, 111, 211) which is elongated diametrically with respect to an axis of rotation (26) of a shaft to be turned, the first body (11, 111, 211) being rigidly coupled to elements for actuating a simple rotation about the axis (26), and a second diametrically elongated body (12, 112, 212), which is arranged transversely to the first body (11, 111, 211) and is coaxial thereto; the second body (12, 112, 212) is associated with the first body (11, 111, 211) and is rigidly coupled to elements for generating torsional vibrations about the axis (26); the second body (12, 112, 212) performs alternating angular movements with oscillations of reduced extent with respect to the first body (11, 111, 211). The second body is adapted to support the shaft to be turned. Elastic compression elements are interposed between the adjacent consecutive portions (11a, 12a, 111a, 112a, 211 a, 212a) of the first and second diametrically elongated bodies (11, 111, 211, 12, 112, 212) and are adapted to cushion small oscillations and facilitate their return. The elastic compression elements are constituted, between each portion (11 a, 111a, 211a) of the first body (11, 111, 211) and the corresponding portions (12a, 112a, 212a) of the second body (12, 112, 212) between which they are arranged, by at least one pair of elastic elements.

## Description

The present invention relates to a device for combined rotation of a shaft about its own axis.

The expression "combined rotation" is used to reference a simple rotary motion in one direction, combined with an alternating coaxial angular motion of limited extent.

Especially in the field of turfing equipment, devices are currently known and used extensively for subjecting the motor shaft, to which for example an arc-like excavation blade can be coupled during said turfing operations, to a combined rotation about its own axis.

These known combined rotation devices generally comprise a first body which is elongated diametrically with respect to the axis of rotation of the driven shaft.

Said first body is rigidly coupled to means for actuating a simple rotation of said first body about the axis of the shaft.

Known devices further have a second body, which also is elongated diametrically, lies transversely to the first body and is coaxial thereto.

Said second body is associated with the first body and is rigidly coupled to means for generating torsional vibrations about the same axis of the shaft to be turned.

The second body is therefore adapted to rotate alternately with oscillations of reduced extent with respect to the first body and to move the shaft for transmission of the torque for example to the above cited arc-like blade.

Diametrically opposite elastic compression means are interposed between the consecutive adjacent portions of the first and second diametrically elongated bodies and are adapted to cushion small oscillations and facilitate their return.

Said elastic means are generally constituted, between each pair of consecutive portions, by an optionally preloaded helical spring, which is coupled by means of its ends to the respective portions of the first and second bodies by interposition of an oscillation dome, said domes allowing the spring to avoid bending, with great advantages in terms of durability.

Known devices as described above are well-suited for use in low-power turfing machines and with arc-like blades having a small diameter, i.e., between 25 and 50 centimeters.

For the actuation of arc-like blades having a larger diameter, up to 80 centimeters or more, it is necessary to have more power, and this leads, for known devices, to a stress which causes rapid deterioration of the efficiency of the springs, with consequent malfunction of the turfing apparatus.

The aim of the present invention is to provide a device for the combined rotation of a shaft about its own axis which is capable of obviating the drawbacks shown by known types of device.

Within this aim, an object of the present invention is to provide a device which is more durable and efficient.

Another object of the present invention is to provide a device according to the invention which can be installed easily even in turfing machines of known types which are already in operation.

Another object of the present invention is to provide a device which can be installed in both low-power and high-power machines for moving arc-like blades having diameters from 20 centimeters up to 80 centimeters or more.

Another object of the present invention is to provide a device for the combined rotation of a shaft about its own axis which can be manufactured cheaply with known systems and technologies.

This aim and these and other objects, which will become better apparent hereinafter, are achieved by a device for the combined rotation of a shaft about its own axis, of the type which comprises a first body which is elongated diametrically with respect to an axis of rotation of a shaft to be turned, said first body being rigidly coupled to means for actuating a simple rotation of said first body about said axis, and a second diametrically elongated body, which is arranged transversely to said first body and is coaxial thereto, said second body being associated with said first body and being rigidly coupled to means for generating torsional vibrations about the axis of said simple rotation, said second body being adapted to perform angular movements with oscillations of reduced extent with respect to said first body and to support said shaft to be turned, elastic compression means being interposed between the adjacent consecutive portions of said first and second diametrically elongated bodies and being adapted to cushion small oscillations and facilitate their return, said device being characterized in that said elastic compression means are constituted, between each portion of the first body and said corresponding portions of the second body between which they are arranged, by at least one pair of elastic elements.

Further characteristics and advantages of the invention will become better apparent from the following detailed description of three preferred but not exclusive embodiments thereof, illustrated by way of non-limiting example in the accompanying drawings, wherein:
Figure 1 is a perspective view of a device according to the invention in a first embodiment thereof;
Figure 2 is a sectional front view, taken along a perpendicular plane, of a device according to the invention;
Figure 3 is a view of a portion of the cross-section of Figure 2, with the device in an operating position;
Figure 4 is a sectional front view, taken along a perpendicular plane, of the device according to the invention in a second embodiment thereof;
Figure 5 is a sectional front view, taken along a perpendicular plane, of the device according to the invention in a third embodiment thereof.

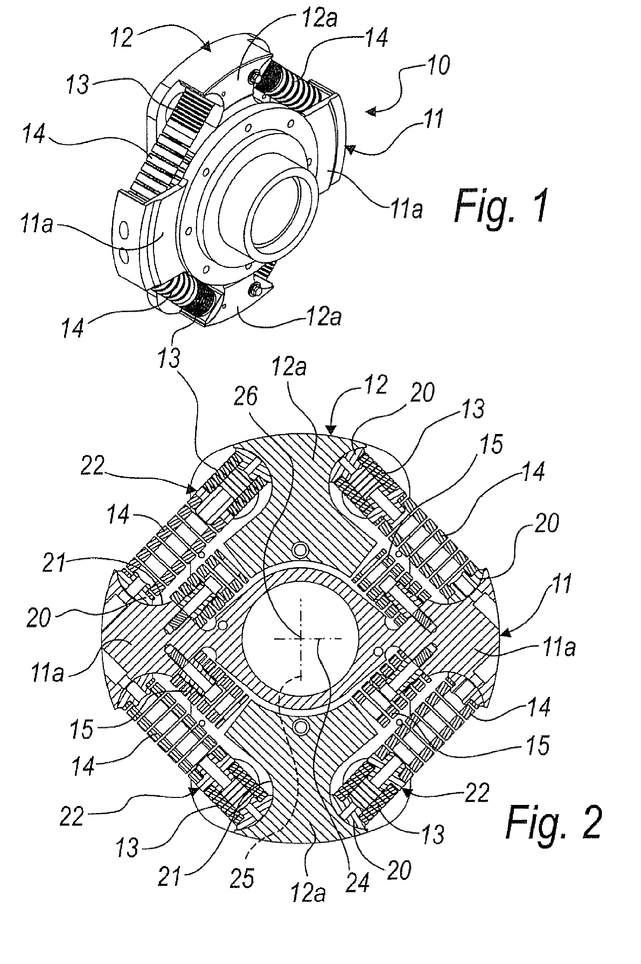

With reference to the figures, a device for the combined rotation of a shaft about its own axis according to the invention is designated generally by the reference numeral 10 in its first embodiment, which is shown in Figures 1 to 3.

The device 10 comprises a first body 11, which protrudes diametrically (extends on a diametrical direction) with respect to a rotation axis 26 of a shaft to be turned, which is not shown for the sake of simplicity.

The first body 11 is rigidly coupled to actuation means for actuating a simple rotation, which by means of the first body 11 reaches the shaft to be turned.

A second diametrically elongated body 12 (that extends on a further diametrical direction with respect to the rotation axis 26) is associated with the first body 11, lies transversely to the first body 11 and is coaxial thereto.

The second body 12 supports the shaft to be turned and is coupled to vibration means for generating torsional vibrations about the same axis as the simple rotation.

The second body 12, and the shaft with it, therefore rotates both in one direction, by way of the continuous rotation of the first body 11, and alternately with small oscillations with respect to the continuous rotation of the first body 11 with which it is associated.

Diametrically opposite elastic compression means, adapted to cushion small oscillations and facilitate their return, are interposed between the adjacent consecutive portions 11a and 12a respectively of the first and second diametrically elongated bodies 11 and 12.

Said elastic compression means are constituted, between each portion 11a of the first body 11 and an adjacent portion 12a of the second body 12, by at least one pair of elastic elements.

In the first embodiment shown in Figures 1 to 3, of these elastic elements, two (a pair) are arranged in series and an additional third element is arranged in parallel to the first two elements.

Said two elastic elements in series are arranged substantially in a tangential direction with respect to the substantially circular structure of the device 10.

In the embodiments described here by way of non-limiting example of the invention, the elastic elements are each constituted by a cylindrical helical spring.

The two first elements in series are constituted by a first spring 13, which is adapted to work under the actuation of relatively low torques, and a second spring 14, which is more rigid and longer than the first spring 13 and is adapted to work under the actuation of greater torques when the first spring 13 has been fully packed.

The third elastic element, arranged in parallel to the first two elastic elements, is constituted by a third spring 15.

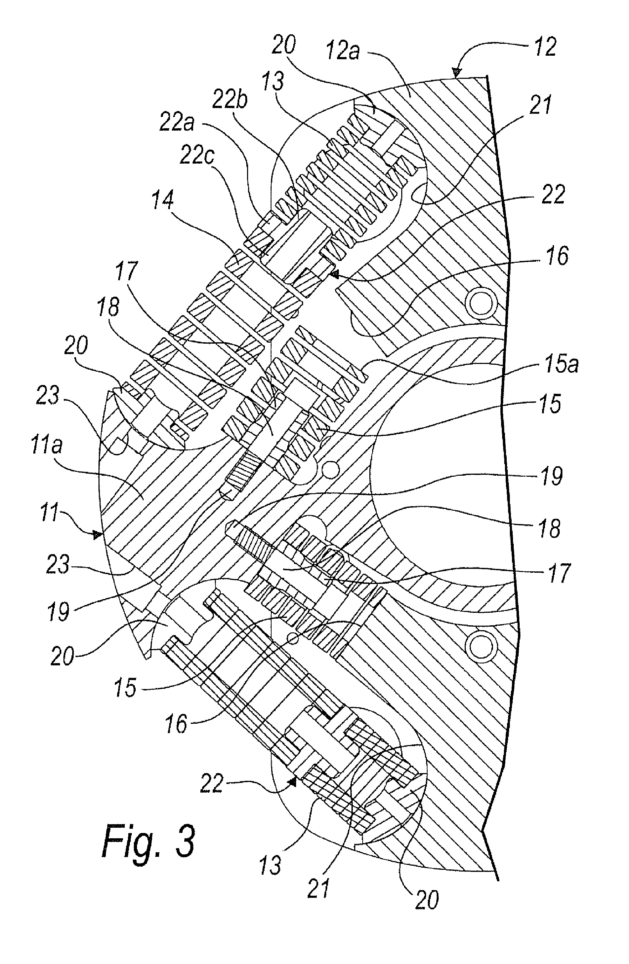

The third spring 15 is normally not loaded and is fixed by one of its ends to one of the first or second bodies 11 or 12 while its opposite end is free and is adapted to abut against a facing abutment surface 16 located at one of said first or second bodies (in the specific example of Figure 3 it belongs to the second body 12) in order to cooperate with the two first and second springs 13 and 14.

In the exemplary embodiment described here, the third spring 15 is fixed to the first body 11 by means of a bush 17 which is inserted coaxially without play in the space inside its turns.

The bush 17 is crossed by a threaded element 18, which is screwed onto a corresponding complementarily threaded hole 19 in the first body 11.

The first spring 13 is coupled to the second body 12 while the second spring 14 is rigidly coupled to the first body 11.

Each of the two first and seconds springs 13 and 14 is coupled to the respective body by way of the interposition of a dome-shaped element 20, which can slide within a corresponding complementarily shaped seat 21 formed in the corresponding body.

The dome-shaped elements 20, by sliding in their seats 21, increase the life of the springs, limiting their flexing during compression and traction.

As in known types of device, in order to prevent the springs 13 and 14 from escaping from the device 10, the dome-shaped element 20 fixed to the second spring 14 is fixed to the first body 11 by means of a pin, which is not illustrated for the sake of simplicity but whose through hole 23 for its insertion is visible.

The first and second springs 13 and 14 are interconnected by means of an abutment and centering element 22.

The abutment and centering element 22 is constituted by a disk 22a, on the edges of which the ends of the facing first and second springs 13 and 14 rest; two cylindrical centering portions 22b and 22c, respectively for the first and second springs 13 and 14, protrude axially from said disk.

The device 10 ensures improved versatility, durability and efficiency with respect to known devices.

The first spring 13 in fact allows to apply the device 10 to a turfing machine which must work at limited power levels, in order to manage an arc-like blade which has a limited diameter.

If the device 10 is applied to a high-power turfing machine, i.e., a machine which is capable of moving arc-like blades having diameters up to 80 centimeters, the first spring 13, when actuated, is packed rapidly and the second more rigid spring 14 starts to work.

Rapid wear of the second spring 14 is prevented by way of the third spring 15, which is arranged so as to work in parallel with the springs 13 and 14.

When the device 10 is inactive, the third spring 15, which is normally not loaded, has its free end 15a spaced from the abutment surface 16, so as to begin compressing only when the second spring 14 is already partially compressed.

In this manner, the third spring 15 cooperates with the second spring 14, as shown in Figure 3, extending its life.

The springs 13, 14 and 15 are arranged symmetrically with respect to the diametrical axes 24 and 25 respectively of the first and second bodies 11 and 12.

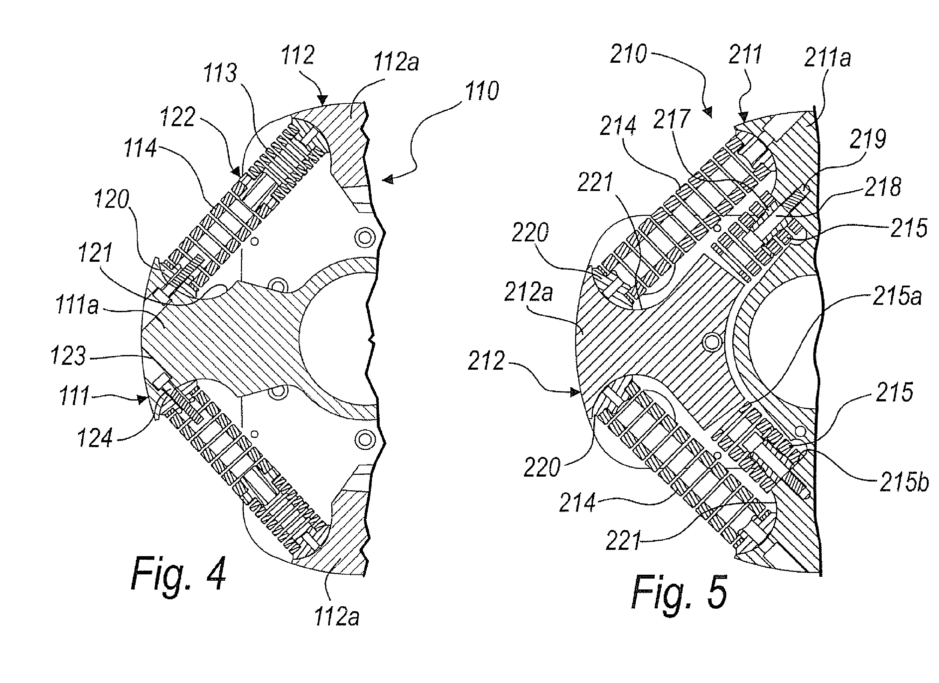

In the second embodiment of the device according to the invention, designated by the reference numeral 110 in Figure 4, two elastic elements in series are provided between two contiguous portions 111a and 112a of the two diametrically elongated bodies 111 and 112 and are arranged substantially in a tangential direction with respect to the substantially circular structure of the device 110.

Said two elastic elements in series are two cylindrical helical compression springs, as described for the first embodiment of the device 10.

There is therefore a first spring 113, which is adapted to work when actuated by relatively low torques, and a second spring 114, which is more rigid than the first spring 113 and is adapted to work when actuated by torques that are more intense or greater than those actuating the first spring.

The first spring 113 and the second spring 114 are coupled to the respective second body 112 and first body 111 on which they are suitable to push, each by way of the interposition of a dome-shaped element 120 which can slide in a corresponding complementarily shaped seat 121 formed in the respective body 111 or 112.

The springs 113 and 114, in this embodiment also, are mutually connected by means of an abutment and centering element 122 which is fully similar.

Figure 4 illustrates, within the hole 123, the locking pin 124, in this case a socket hex screw, for an oscillating element 120.

The second embodiment 110 of the invention is particularly adapted for medium-low power turfing machines.

In the third embodiment of the device according to the invention, shown in Figure 5 and designated therein by the reference numeral 210, there are, between two mutually proximate portions 211a and 212a of the diametrically elongated bodies 211 and 212, two elastic elements which are arranged in parallel, in a substantially tangential direction with respect to the substantially circular structure of the device 210.

Said elastic elements are constituted, between each portion 211 a of the first body 211 and an adjacent portion 212a of the second body 212, by two springs 214 and 215 arranged in parallel.

A first outer spring 214 is coupled to the first body 211 and second body 212, against which it is suitable to push, by interposition with each of its ends of a dome-shaped element 220, which can slide in a corresponding complementarily shaped seat 221 formed in each of the bodies 211 and 212.

The second inner spring 215 has a normally free end 215a and is fixed with its opposite end 215b to the first body 211 by means of a bush 217 which is inserted coaxially without play in the space within its turns.

The bush 217 is crossed by a threaded element 218, which is screwed into a corresponding complementarily threaded hole 219 in the first body 211.

Said third embodiment of the device 210 according to the invention is used in particular in medium-high power turfing machines.

In practice it has been found that the invention thus described solves the problems noted in known types of device for the combined rotation of a shaft about its own axis.

In particular, the present invention provides a device for the combined rotation of a shaft about its own axis which lasts longer and is more efficient.

Moreover, the present invention provides a device according to the invention which can be installed easily even in known types of turfing machine which are already operational.

Moreover, the present invention provides a device which can be installed on low- and high-power machines for moving arc-like blades having diameters from 20 centimeters to over 80 centimeters.

Moreover, the present invention provides a device for the combined rotation of a shaft about its own axis which can be manufactured cheaply with known types of technology, techniques and systems.

The invention thus conceived is susceptible of numerous variations and modifications, all of which are within the scope of the appended claims; all the details may further be replaced with other technically equivalent elements.

In practice, the materials employed, so long as they are compatible with the specific use, as well as the dimensions, may be any according to requirements and to the state of the art.

The disclosures in Italian Patent Application No. PD2006A000059 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device for the combined rotation of a shaft about its own axis, of the type which comprises a first body (11, 111, 211) which is elongated diametrically with respect to an axis of rotation (26) of a shaft to be turned, said first body (11, 111, 211) being rigidly coupled to means for actuating a simple rotation of said first body (11, 111, 211) about said axis (26), and a second diametrically elongated body (12, 112, 212), which is arranged transversely to said first body (11, 111, 211) and is coaxial thereto, said second body (12, 112, 212) being associated with said first body (11, 111, 211) and being rigidly coupled to means for generating torsional vibrations about the axis (26) of said simple rotation, said second body (12, 112, 212) being adapted to perform angular movements with oscillations of reduced extent with respect to said first body (11, 111, 211) and to support said shaft to be turned, elastic compression means being interposed between the adjacent consecutive portions (11a, 12a, 111a, 112a, 211a, 212a) of said first and second diametrically elongated bodies (11, 111, 211, 12, 112, 212) and being adapted to cushion small oscillations and facilitate their return, said device being **characterized in that** said elastic compression means are constituted, between each portion (11a, 111a, 211a) of the first body (11, 111, 211) and said corresponding portions (12a, 112a, 212a) of the second body (12, 112, 212) between which they are arranged, by at least one pair of elastic elements.

2. The device according to claim 1, **characterized in that** of said first elastic elements, at least two are arranged in series and at least one second one is arranged in parallel to said two first elements, said first and second elastic elements being arranged substantially tangentially with respect to the substantially circular structure of said device (10).

3. The device according to claim 1, **characterized in that** said elastic elements are in series and are arranged substantially in a tangential direction with respect to the substantially circular structure of said device (110).

4. The device according to claim 1, **characterized in that** said elastic elements are arranged in parallel and substantially tangentially with respect to the substantially circular structure of said device (210).

5. The device according to one or more of the preceding claims, **characterized in that** said elastic elements are each constituted by a cylindrical helical spring (13, 14, 15, 113, 114, 214, 215).

6. The device according to one or more of claims 1, 2 and 5, **characterized in that** said at least two first elements in series are constituted by a first spring (13), which is adapted to work when actuated by relatively low torques, and a second spring (14), which is more rigid than said first spring (13) and is adapted to work when actuated by greater torques.

7. The device according to claim 6, **characterized in that** said at least one second elastic element arranged in parallel to said two first elastic elements is constituted by a third spring (15) which is normally not loaded and is fixed by one of its ends to one of said first or second bodies (11, 12), while its opposite end is free and is adapted to abut against a facing abutment surface (16) in order to cooperate with said two first springs (13, 14).

8. The device according to claims 6 and 7, **characterized in that** said first spring (13) and said second spring (14) are rigidly coupled to the respective first or second bodies (11, 12) on which they are adapted to push, each by way of the interposition of a dome-shaped element (20) which can slide in a corresponding complementarily shaped seat (21) provided in said respective bodies (11, 12).

9. The device according to claims 6 to 8, **characterized in that** said first and second springs (13, 14) are interconnected by means of an abutment and centering element (22).

10. The device according to claim 9, **characterized in that** said abutment and centering element (22) is constituted by a disk (22a) on the edges of which the ends of the facing first and second springs (13, 14) rest, two cylindrical centering portions (22b, 22c) protruding axially from said disk, each for one of said two springs (13, 14).

11. The device according to claims 6 to 10, **characterized in that** said third spring (15) is fixed to the first body (11) or to the second body (12) by means of a bush (17) which is inserted coaxially without play in the space within its turns, said bush (17) being crossed by a threaded element (18) which is screwed to a corresponding complementarily threaded hole (19) in said first body (11) or said second body (12).

12. The device according to claims 1, 3 and 5, **characterized in that** said at least two first elements in series are constituted by a first spring (113), which is adapted to work when actuated by relatively low torques, and a second spring (114), which is more rigid than said first spring (113) and is adapted to work when actuated by greater torques, said first and second springs (113, 114) being rigidly coupled to the respective first or second bodies (111, 112) on which they are adapted to push, each by way of the interposition of a dome-shaped element (120), which can slide in a corresponding complementarily shaped seat (121) which is formed in said bodies (111, 112), and being mutually connected by means of an abutment and centering element (122).

13. The device according to claims 1, 4 and 5, **characterized in that** said elastic elements are provided, between each portion (211 a) of the first body (211) and an adjacent portion (212a) of the second body (212), by two springs (214, 215) arranged in parallel, a first external spring (214), which is coupled to the first and second bodies (211, 212) on which it is adapted to push, by interposition with each of its ends of a dome-shaped element (220) which can slide in a corresponding complementarily shaped seat (221) formed in each of said bodies (211, 212), the second internal spring (215) having a normally free end, and being fixed, with its opposite end, to the first or second bodies (211, 212) by means of a bush (217) which is inserted coaxially without play in the space within its turns, said bush (217) being crossed by a threaded element (218) which is screwed to a corresponding complementarily threaded hole (219) in said first or second body (211, 212).
